# EUROPÄISCHE PATENTSCHRIFT

(11) **EP 0 818 026 B1**
(45) Veröffentlichungstag und Bekanntmachung des Hinweises auf die Patenterteilung: **26.08.1998**
(21) Anmeldenummer: 96907303.0
(22) Anmeldetag: 29.03.1996
(51) Int. Cl.: G06K 19/077

(54) **STAPELBARE DATENTRÄGERANORDNUNG**
STACKABLE DATA SUBSTRATE ARRANGEMENT
AGENCEMENT DE SUPPORTS DE DONNEES SUPERPOSABLES

(30) Priorität: 31.03.1995 DE 19512164
(43) Veröffentlichungstag der Anmeldung: 14.01.1998
(73) Patentinhaber: SIEMENS AKTIENGESELLSCHAFT, 80333 München (DE)
(72) Erfinder: EMBO, Georges, B-8920 Langemark (BE); ACKE, Edgard, B-8020 Oostkamp (BE); PREINER, Peter, D-81479 München (DE); SCHMIDT, Helge, D-67346 Speyer (DE)
(86) Internationale Anmeldenummer: DE9600551
(87) Internationale Veröffentlichungsnummer: WO9630869

(56) Entgegenhaltungen:
- US-A- 4 780 791
- US-A- 4 889 498
- PATENT ABSTRACTS OF JAPAN vol. 9, no. 329 (P-416) [2052] , 24.Dezember 1985 & JP,A,60 153583 (MITSUBISHI JUSHI), 13.August 1985,
- ELEKTRONIK, Bd. 37, Nr. 17, 19.August 1988, MÜNCHEN,DE, Seiten 42-43, XP000112865 "Speicher: viel Leistung-wenig Platz"

## Beschreibung

Die Erfindung betrifft eine stapelbare Datentrageranordnung umfassend ein kartenförmiges Trägerelement, mindestens einen auf dem Trägerelement angeordneten integrierten Halbleiterschaltkreis, mindestens einen auf dem Trägerelement angeordneten mit dem Halbleiterschaltkreis verbundenen Außenanschluß zum elektrischen Kontaktieren des Halbleiterschaltkreises, wobei der Außenanschluß um eine der Kantenflächen des Trägerelements umlaufend ausgebildet ist und an der Kantenfläche und den angrenzenden gegenüberliegenden Hauptflächen des Tragerelements jeweils eine Anschlußfläche aufweist, die elektrisch miteinander verbunden sind.

Eine derartige stapelbare Datentrageranordnung ist bereits in der älteren deutschen Anmeldung Nr. P 44 35 122.4 beschrieben, die hiermit in die Offenbarung einbezogen wird. Durch die besondere Ausgestaltung des Außenanschlusses können mehrere solcher Karten problemlos aufeinandergelegt werden, so daß gleichzeitig eine Vielzahl gleichartiger Datenträgeranordnungen ohne aufwendige zusätzliche Hilfsmittel an ein Verarbeitungsgerat angeschlossen werden kann. Indem Anschlußflachen nicht nur im Bereich der Kante der Karte, sondern, damit elektrisch verbunden, auch auf den beiden Hauptflachen der Karte vorgesehen sind, ist es möglich, daß die Kontaktierung mehrerer übereinander gelegter Karten unmittelbar im Stapel, also ohne weitere Hilfsmittel, beispielsweise einer Kontaktschiene im Verarbeitungsgerat, zustandekommt.

Die beschriebene, um eine Kante der Karte umlaufende Kontaktausführung kann fertigungstechnisch günstig realisiert werden. Problematisch ist jedoch ein Toleranzausgleich zwischen den verschiedenen Kontaktstellen, wenn mehrere Karten übereinandergelegt werden. Auch bei bündig umlaufenden Außenanschlüssen muß fertigungstechnisch immer mit Höhen- bzw. Dickentoleranzen von mehreren hundertstel Millimeter gerechnet werden. Je nach Anzahl der übereinandergestapelten Karten resultiert dadurch schnell ein nicht mehr zulässiger systematischer Fehler. Erschwerend kommt hinzu, daß vorzugsweise acht Außenanschlüsse nebeneinander an jeder Karte angeordnet sind, die jedoch idealerweise alle in einer Ebene liegen sollten. Ein weiteres, sich unmittelbar aus der Stapelung der Karten ergebendes Problem besteht darin, daß eine elektromagnetische Abschirmung der Speicherkarten untereinander erforderlich werden kann.

Erfindungsgemäß resultiert eine hinsichtlich dieser Problematik verbesserte stapelbare Datentrageranordnung der eingangs angegebenen Art dadurch, daß im Trägerelement zwei parallel zueinander verlaufende Schlitze vorgesehen sind, die sich etwa gleich weit wie der zwischen ihnen angeordnete Außenanschluß von der Kantenfläche in das Trägerelement erstrecken, so daß durch den zwischen den Schlitzen liegenden Bereich des Trägerelements ein senkrecht zu dessen Hauptflächen biegbarer Kontaktzahn gebildet ist.

Weitere Ausgestaltungen der Erfindung sind in Unteransprüchen gekennzeichnet.

Nachfolgend wird nun der Aufbau einer erfindungsgemaßen Datentrageranordnung in der Zeichnung näher erläutert. Es zeigen:
Figur 1 eine perspektivische Aufsicht auf die Datentrageranordnung und einen Teil der Abschirmung und
Figur 2 eine Schnittdarstellung in Längsrichtung der Karte und
Figur 3 eine perspektivische Aufsicht auf einen durchkontaktierten Kartenstapel.

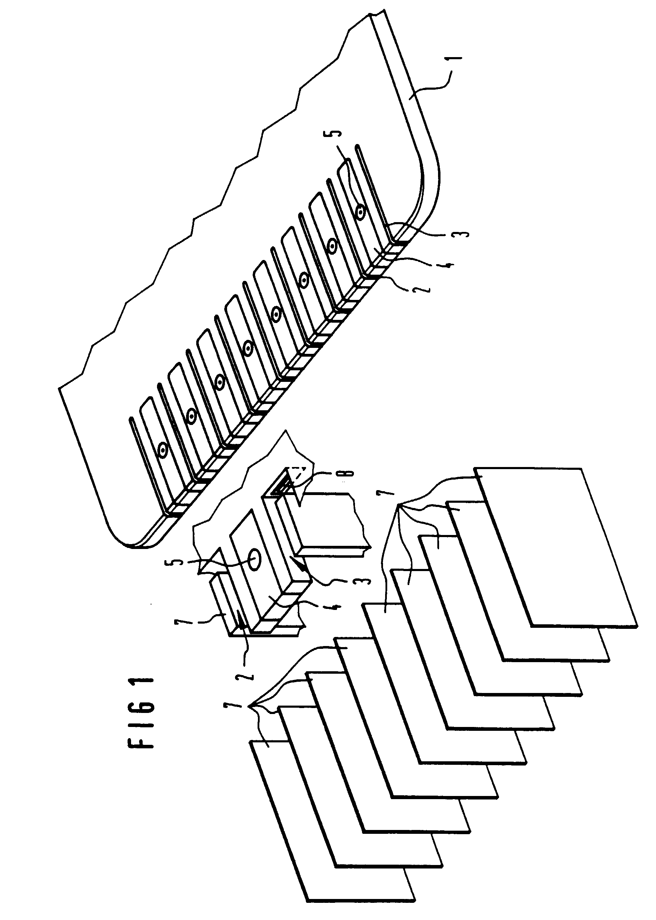

In Figur 1 ist eine Datentrageranordnung mit einem beispielsweise aus Kunststoffmaterial bestehendem Trägerelement 1 dargestellt. An der Querseite der Karte sind acht in regelmäßigem Abstand entlang der Kantenfläche angeordnete Außenanschlüsse 4 dargestellt. Jeder Außenanschluß 4 bildet zusammen mit den jeweils vorgesehenen Schlitzen 2,3 jeweils einen Kontaktzahn. Dadurch ist jede einzelne Kontaktstelle unabhängig von der anderen in einem bestimmten Bereich biegbar.

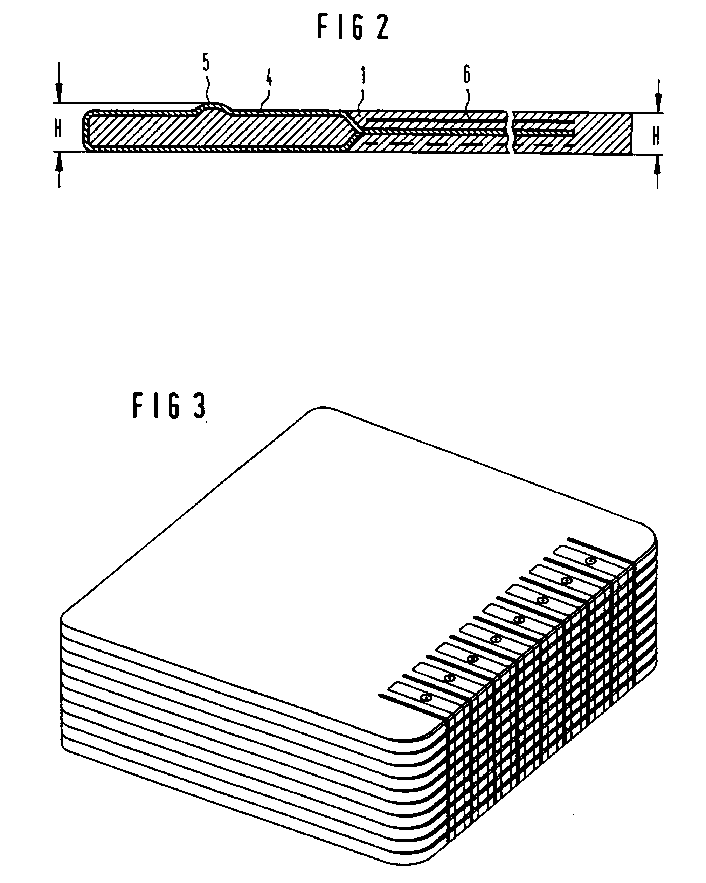

Eine sichere Kontaktierung von einem Kontaktzahn der einen Karte zu dem der benachbarten Karte zu erreichen, wird mit zunehmender Stapelhöhe immer schwieriger. Es ist deshalb vorteilhaft, wenn eine der Hauptflächen-Anschlußflächen mit einer Noppe 5 ausgebildet ist. Diese Noppe 5 drückt bei der darüberliegenden Karte auf eine Fläche. Den dadurch erforderlich werdenden Dickenausgleich erreicht man dadurch, daß man die Dicke der Datentrageranordnung derart konisch ausführt, daß die Dicke einschließlich der überstehenden Noppenhöhe auf der einen Seite der im wesentlichen quaderförmig ausgebildeten Datentrageranordnung der Dicke an der gegenüberliegenden Seite entspricht, wie dies in Figur 2 schematisch angedeutet ist. Diese Ausführung ist durch entsprechende Gestaltung der Spritzform für die Karte einfach zu fertigen, wobei die Toleranzen in diesem Fall unkritisch sind.

Bei hohen Datenraten ist eine elektrische Abschirmung der Karte notwendig, um den Verlust von Daten oder die Beeinflussung der Daten einer passiven Karte durch die danebenliegende aktive Karte zu verhindern. Dies kann vorteilhaft dadurch erreicht werden, daß unter der endgültigen Kartenoberfläche (Deckfolie) eine elektrisch leitende Folie 6 ein- oder beidseitig aufgebracht ist, vgl. Figur 2. Die Kontaktierung der Abschirmung in der Karte zum Gerät kann entweder über einen gesonderten Pin (Zahn) oder/und in den Schlitzen (Zwischenräume der Kontakte) mit den buchsenseitigen Abschirmblechen 7 erfolgen, wie dies in der zu Figur 1 gehörenden Ausschnittsskizze angedeutet ist. In letzterem Fall greifen von der Buchse- bzw. der Aufnahmestelle für die Speicherkarte entsprechende Abschirmesser 7 in die Schlitze 2,3 der Speicherkarte ein und stellen den Kontakt 8 zur Abschirmung 6 in den Speicherkarten her. In Figur 2 ist im übrigen auch erkennbar, daß das Leadframe, auf dem der Speicherchip befestigt ist, einstückig aus dem Trägerelement 1 heraus- und als umlaufender Außenanschluß 4 zurückgeführt ist.

Die Karten des Stapels können gegebenenfalls nur mit der Karte, an der die zur galvanischen Kontaktierung vorgesehenen Kontaktflächen angeordnet sind, deckungsgleich übereinanderliegen. Es können also z.B. halbe und ganze Karten im Stapel abwechseln. Ebenso können Dummy- oder Busverstärkerkarten in den Stapel eingefügt sein.

Eine ausreichende Biegbarkeit der Kontakt zähne ist auch bei Ausführungen gegeben, bei denen die Schlitze 2, 3 nicht von einer zur gegenüberliegenden Hauptfläche durchgehend ausgeführt sind, sondern bei denen eine dünne Verbindung bzw. Haut von etwa 0,2 mm Dicke oder weniger zwischen den Kontaktzähnen bestehen bleibt. Diese Verbindung kann ein gerader Verbindungssteg oder beispielsweise auch ein wulstartiger Faltenbalg sein. die Verbindung kann zu einer der beiden Hauptflächen, also oben oder unten, oder etwa in der Mitte zwischen ihnen angeordnet sein. Auch in der Längsrichtung, also in das Trägerelement hinein, kann die Verbindung vollständig oder teilweise ausgeprägt sein.

## Patentansprüche

1. Stapelbare Datenträgeranordnung umfassend ein kartenförmiges Trägerelement (1), mindestens einen auf dem Trägerelement (1) angeordneten integrierten Halbleiterschaltkreis, mindestens einen auf dem Trägerelement (1) angeordneten mit dem Halbleiterschaltkreis verbundenen Außenanschluß (4) zum elektrischen Kontaktieren des Halbleiterschaltkreises, wobei der Außenanschluß (4) um eine der Kantenflächen des Trägerelements (1) umlaufend ausgebildet ist und an der Kantenfläche und den angrenzenden gegenüberliegenden Hauptflächen des Trägerelement (1) jeweils eine Anschlußfläche aufweist, die elektrisch miteinander verbunden sind,
**dadurch gekennzeichnet,** daß im Trägerelement (1) zwei parallel zueinander verlaufende Schlitze (2,3) vorgesehen sind, die sich etwa gleich weit wie der zwischen ihnen angeordnete Außenanschluß (4) von der Kantenfläche in das Trägerelement (1) erstrecken, so daß durch den zwischen den Schlitzen (2,3) liegenden Bereich des Trägerelements (1) ein senkrecht zu dessen Hauptflächen biegbarer Kontaktzahn gebildet ist.

2. Stapelbare Datenträgeranordnung nach Anspruch 1, **dadurch gekennzeichnet**, daß die Datenträgeranordnung mehrere in regelmäßigem Abstand entlang der Kantenfläche angeordnete Außenanschlüsse (4) aufweist und daß diese zusammen mit jeweils vorgesehenen Schlitzen (2,3) jeweils einen Kontaktzahn bilden.

3. Stapelbare Datenträgeranordnung nach Anspruch 1 oder 2, **dadurch gekennzeichnet**, daß eine der Hauptflächen-Anschlußflächen mit einer Noppe (5) ausgebildet ist.

4. Stapelbare Datenträgeranordnung nach Anspruch 3, **dadurch gekennzeichnet,** daß die Dicke der Datenträgeranordnung derart konisch ausgebildet ist, daß die Dicke einschließlich der überstehenden Noppenhöhe auf der einen Seite der im wesentlichen quaderförmig ausgebildeten Datenträgeranordnung der Dicke an der gegenüberliegenden Seite entspricht.

5. Stapelbare Datenträgeranordnung nach einem der Ansprüche 1 bis 4,
**dadurch gekennzeichnet,**daß
im Trägerelement (1) eine in dessen Ebene verlaufende Abschirmung (6) vorgesehen ist und daß die Schlitze (2,3) als Aufnahmen für geräteseitige Abschirmbleche (7) dienen.

## Claims

1. Stackable data carrier arrangement comprising a carrier element (1) in card form, at least one integrated semiconductor circuit arranged on the carrier element (1), at least one outer terminal (4), arranged on the carrier element (1) and connected to the semiconductor circuit, for the electrical contacting of the semiconductor circuit, the outer terminal (4) being formed such that it runs around one of the edge faces of the carrier element (1) and having on the edge face and the adjoining, opposite main faces of the carrier element (1) in each case a terminal area, which areas are electrically connected to one another, characterized in that in the carrier element (1) there are provided two mutually parallel-running slots (2, 3), which extend from the edge face into the carrier element (1) to approximately the same extent as the outer terminal (4) arranged between them, with the result that there is formed by the region of the carrier element (1) lying between the slots (2, 3) a contact tooth which can be bent perpendicularly with respect to the main faces of the said carrier element.

2. Stackable data carrier arrangement according to Claim 1, characterized in that the data carrier arrangement has a plurality of outer terminals (4) arranged at regular intervals along the edge face and in that, together with respectively provided slots (2, 3), these terminals in each case form a contact tooth.

3. Stackable data carrier arrangement according to Claim 1 or 2, characterized in that one of the mainface terminal areas is formed with a protuberance (5).

4. Stackable data carrier arrangement according to Claim 3, characterized in that the thickness of the data carrier arrangement is conically designed in such a way that the thickness, including the projecting protuberance height on the one side of the data carrier arrangement of substantially cuboidal form, corresponds to the thickness on the opposite side.

5. Stackable data carrier arrangement according to one of Claims 1 to 4, characterized in that in the carrier element (1) there is provided a screening (6), running in the plane of the said element, and in that the slots (2, 3) serve as receptacles for screening plates (7) on the equipment.

## Revendications

1. Agencement de supports de données superposables, comprenant un élément de support (1) en forme de carte, au moins un circuit semi-conducteur intégré disposé sur l'élément de support (1), au moins une connexion externe (4) disposée sur l'élément de support (1) et reliée au circuit semi-conducteur, permettant d'établir le contact électrique avec le circuit semi-conducteur, la connexion externe (4) étant réalisée de manière à envelopper l'une des faces latérales de l'élément de support (1) ) et comportant sur la face latérale et sur les faces principales opposées contiguës de l'élément de support (1) respectivement une zone de contact qui sont reliées électriquement entre elles, caractérisé en ce que deux fentes (2, 3) parallèles l'une à l'autre sont prévues dans l'élément de support (1), qui s'avancent sensiblement aussi loin de la face latérale dans l'élément de support (1) que la connexion externe (4) disposée entre elles, de manière à obtenir grâce à la partie de l'élément de support (1) située entre les fentes (2, 3) une dent de contact à flexibilité verticale par rapport aux faces principales de celui-ci.

2. Agencement de supports de données superposables selon la revendication 1, caractérisé en ce que l'agencement de supports de données comporte plusieurs connexions externes (4) disposées à intervalles réguliers le long de la face latérale et en ce que celles-ci, ensemble avec des fentes (2, 3) prévues à chaque fois, forment respectivement une dent de contact.

3. Agencement de supports de données superposables selon la revendication 1 ou 2, caractérisé en ce que l'une des zones de contact des faces principales est réalisée avec une partie en saillie (5).

4. Agencement de supports de données superposables selon la revendication 3, caractérisé en ce que l'épaisseur de l'agencement de supports de données est réalisée en cône, de sorte que l'épaisseur, y compris la hauteur de la partie en saillie, sur l'un des côtés de l'agencement de supports de données essentiellement en forme de parallélépipède correspond à l'épaisseur sur le côté opposé.

5. Agencement de supports de données superposables selon l'une des revendications 1 à 4, caractérisé en ce que l'élément de support (1) comporte un blindage (6) passant dans son plan et en ce que les fentes (2, 3) servent de logements pour des tôles de blindage (7) côté appareil.
